# EUROPEAN PATENT APPLICATION

(11) **EP 0 845 318 A1**
(43) Date of publication of application: **03.06.1998**
(21) Application number: 97918160.9
(22) Date of filing: 07.05.1997
(51) Int. Cl.: B23D 59/02, B23Q 11/08, B23Q 11/10, B28D 7/02

(54) **DEVICE FOR SUPPRESSING THE DUST GENERATED BY BURRING MACHINES AND ANY OTHER ROTATING MACHINES**

(30) Priority: 08.05.1996 ES 9601232 U
(71) Applicant: Dinaces, S.L., 36600 Villagarcia de Arosa (Pontevedra) (ES)
(72) Inventor: SANTOS COBREIRO, Juan Carlos, E-36600 Villagarcia de Arosa (Pontevedra (ES); SANTOS COBREIRO, Francisco Javier, E-36600 Villagarcia de Arosa (Pontevedra (ES); MARTINEZ DIZ, Paulino, E-36600 Villagarcia de Arosa (Pontevedra (ES)
(74) Representative: Ungria Lopez, Javier
(86) International application number: ES9700114
(87) International publication number: WO9741990

(57) **Abstract**

The device incorporates injectors intended to spray water which is mixed with the dust generated during the cutting of a body, thus forming a pasty mass which drip downwards by gravity. The device comprises basically a semicircular case inside which is partially lodged a cutting disc or saw. The sprayed water injectors are secured on the case and aim at one or both sides of the cutting disc or saw. Thus, the device of the invention eliminates the troublesome and prejudicial dust produced usually by cuts made by saws and discs.

## Description

### OBJECT OF THE INVENTION

As expressed in the title of this specification, the present invention refers to a device for suppressing the dust generated by burring machines and any other rotating machines.

This device has some injectors that spray water which will be mixed with the dust produced during the cutting of different bodies, thus forming a pasty mass which will drip downward by gravity.

In this way the troublesome and harmful dust normally produced in the cutting of bodies done by saws and discs is eliminated. Besides, the absence of this dust prevents the operator from getting dirty and also prevents respiratory type problems.

### BACKGROUND OF THE INVENTION

Nowadays, when cutting is done with a saw or disc of a burring machine or the like, on different bodies, an amount of dust is produced which may cause respiratory problems for the operator precisely due to the inhalation of that cloud of dust given off by the body which has been subjected to the cutting operation.

On the other hand, part of the dust will be deposited on the operator's skin and clothes, whereby the operator will have to adequately clean himself off once the cutting operation has ended.

### DESCRIPTION OF THE INVENTION

In order to overcome the problems and inconveniences cited in the previous section, the invention proposes a device for suppressing the dust generated by burring machines and any other rotating machines. With this new device the troublesome and harmful dust normally produced in the cutting of bodies done with saws and discs is eliminated.

On the other hand, the device of the invention will be coupled to a machine (burring machine, grinding machine) in correspondence with the saw or disc which make some cuts on the respective bodies, such as stones, bricks, wood, etc.

It comprises a case, inside of which the corresponding saw or disc is partially introduced. This case includes some injectors facing one or both surfaces of the disc of the saw. These injectors are connected to a water inlet, in such a way that the water will come out discharged and sprayed highly pressurized by these injectors, against the disc or saw, then producing spraying of water which will mix with the dust coming from the body to be cut during the cutting operation. This mixture formed by dust and sprayed water is a pasty mass that will in principle be projected against the inside surfaces of the case, then said pasty mass dripping downward by gravity.

In this way the troublesome and harmful dust normally produced in the cutting of bodies done with saws and discs is eliminated. Besides, the absence of this dust prevents the operator from getting dirty and also prevents respiratory type problems.

On the other hand, the injectors are fed by means of a hose or the like connected to said injectors or to a small tank established in the case. In the second case, said injectors will in turn be connected to the cited tank. On the other hand, the hose will include a suitable cock.

The device of the invention is an independent element and can be used in any rotating apparatus.

The case has a semicircular shape, in such a way that one of its side walls includes a circular opening, as well as means for coupling and adjusting to the head of the corresponding machine.

Hereinafter to provide a better understanding of this specification and forming an integral part thereof, a series of figures wherein the object of the invention has been represented in an illustrative and non-restrictive manner, is attached hereto.

### BRIEF DESCRIPTION OF THE DRAWINGS

Figure 1 is a perspective view of the device for suppressing the dust generated by burring machines and any other rotating machines, object of the invention. It basically comprises a case, inside of which a saw or disc is housed, also including some injectors through which sprayed water comes out to be mixed with the dust produced during the cutting; thus forming a pasty mass.

Figure 2 is a perspective view of the device of the invention, which does not have the cutting saw or disc.

Figure 3 is a front view of the device.

Figure 4 is a side view of the device of the invention.

Figure 5 is a plan view of the case belonging to the device.

Figure 6 is a front view of the case, according to cut A-B of the previous figure.

### DESCRIPTION OF TEE PREFERRED EMBODIMENT

Making reference to the numbering used in the figures, the device for suppressing the dust generated by burring machines and any other rotating machines is defined as of a semicircular case (1, 1'), inside of which a cutting disc (2) is housed. On one or both side walls of the case some injectors (3 and 4) have been secured and through whose narrow mouths will come out sprayed water directed against the cutting disc (2), the water then mixing with the dust given off during said cutting to form a pasty mass which will drip downward by gravity.

For this purpose, these injectors (3 and 4) are connected to a hose (5) with insertion of a cock (6). The hose (5) through which the pressurized fluid will flow, is in turn connected to a water inlet.

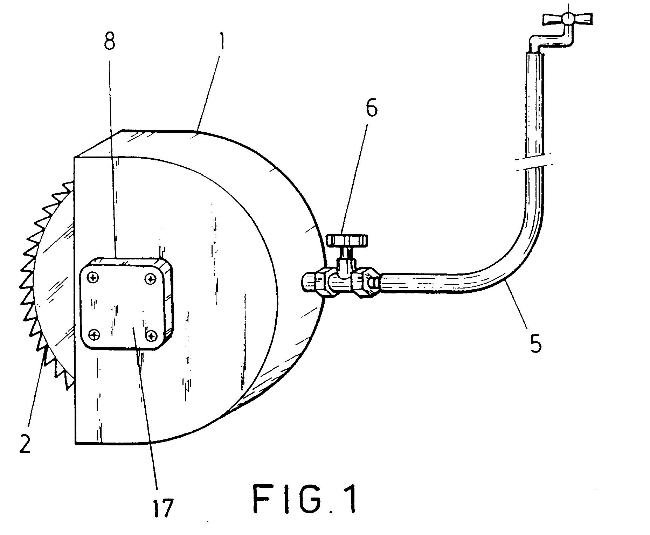

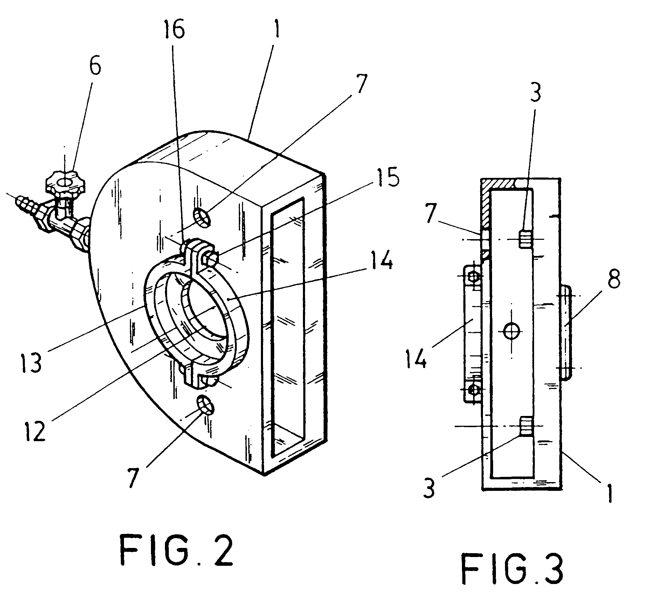

On the other hand, in a first case, as shown in figures 1, 2 and 3, the injectors (3) are secured or screwed to the inside surface of one of the side walls of the case (1), there being some holes (7) facing said injectors (3) on the other opposite wall of said case (1) in order to be able to assemble and disassemble these injectors (3). In this first case, the possibility of including a small additional tank (8) established in the case (1) has also been provided for, in such a way that the injectors (3) will be connected to said tank (8) where the fluid coming from the hose (5) through some inside ducts made in the case (1) will arrive. When the case does not have the additional tank (8), the injectors (3) will be directly connected in correspondence with said inside ducts.

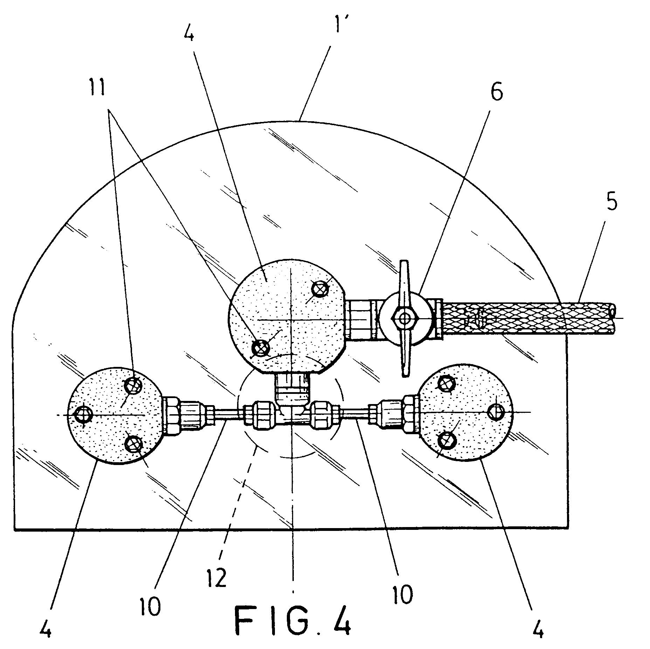

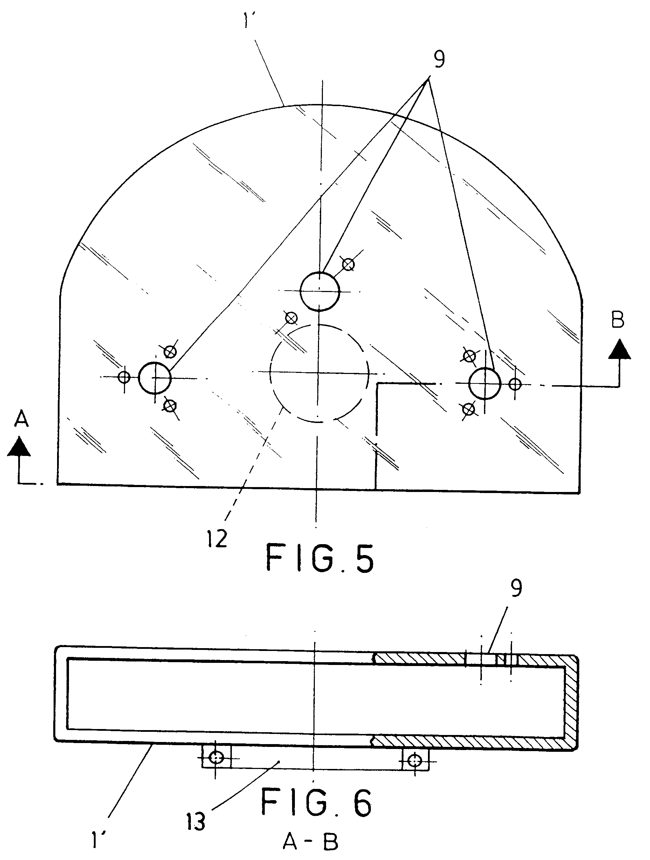

In a second case, just as it is shown in figures 4, 5 and 6, the injectors (4) will be secured externally to one of the side walls of the case (1'), in correspondence with respective circular holes (9) made in said side wall. These injectors (4) are made of plastic material and are communicated to each other by means of some short tubes (10) and with the help of some suitable accessories. The cock (6) is coupled to one of the injectors (4), which on the other hand are secured to the case (1') by means of some screws (11)

The case (1') that has the plastic injectors (4) weighs less than the other case (1), which includes the other injectors (3) which are preferably metallic. Besides, the case (1') that has the plastic injectors (4) does not have holes facing the respective injectors as they are not necessary for assembly and disassembly of the injectors, contrary to what happens with the injectors of the other case (1).

On the other hand, the case (1,1') includes a circular opening (12) established in one of its side walls, as well as a means for coupling and adjusting the head of the corresponding machine. Said means essentially consists of a flange established coaxially to said circular opening (12), at the same time that it is comprised of two parts: a fixed one (13) integral with the case (1, 1') and another movable dismountable one (14), both parts being connected by means of some screws (15) and nuts (16).

Finally, it should be pointed out that the small tank (8) includes a cover (17) for access to the inside of the tank.

## Claims

1. Device for suppressing the dust generated by burring machines and any other rotating machines, essentially characterized in that it comprises a semicircular case (1, 1'), inside of which a cutting disc or saw (2) is introduced, there being some injectors (3 and 4) secured to one or both side walls of the semicircular case (1, 1'), the outlet of these injectors (3 and 4) facing one or both surfaces of the cutting disc or saw; the semicircular case (1, 1') having some suitable means for securing to the respective machine in correspondence with the cutting disc or saw (2), these injectors (3 and 4) connecting to a pressurized water inlet; all of this so that the water comes out sprayed and pressurized by the injectors (3) and (4) against the cutting disc or saw (2), the water and the dust produced in the cutting then mixing, thus forming a pasty mass that will drip downward.

2. Device for suppressing the dust generated by burring machines and any other rotating machines, according to the previous claim, characterized in that the water intake is done by means of a hose (5) or the like provided with a cock (6).

3. Device for suppressing the dust generated by burring machines and any other rotating machines, according to the previous claim, characterized in that the hose (5) is connected directly to the injectors (4).

4. Device for suppressing the dust generated by burring machines and any other rotating machines, according to claim 2, characterized in that the hose (5) is connected to a tank (8) established in the case (1), the injectors (3) also connecting to said tank (8).

5. Device for suppressing the dust generated by burring machines and any other rotating machines, according to claim 1, characterized in that the suitable means of the semicircular case (1, 1') for securing to the respective semicircular case (1, 1') for securing to the respective machine are defined as of an opening (12) made in one of the side walls of the semicircular case (1, 1'), there being around said opening (12) a flange comprised of two parts, a fixed one (13) integral to the case (1, 1') and another movable dismountable one (14).

6. Device for suppressing the dust generated by burring machines and any other rotating machines, according to claim 4, characterized in that the tank (8) includes a cover (17) for access to the inside thereof.
